# EUROPEAN PATENT SPECIFICATION

(11) **EP 2 607 173 B1**
(45) Date of publication and mention of the grant of the patent: **23.07.2014**
(21) Application number: 12198723.4
(22) Date of filing: 20.12.2012
(51) Int. Cl.: B60R 7/00, B60R 7/06

(54) **A storage box group**
Ablageboxgruppe
Groupe de boîte de rangement

(30) Priority: 21.12.2011 TR 201112751
(43) Date of publication of application: 26.06.2013
(73) Proprietor: Tofas Turk Otomobil Fabrikasi Anonim Sirketi, 16369 Bursa (TR)
(72) Inventor: Ayarturk, Hasan, 16369 Bursa (TR); Talay, Erkan, 16369 Bursa (TR); Sakin, Ali, 16369 Bursa (TR); Alanbay, Serkan, 16369 Bursa (TR); Aslan Esat, Yasar, 16369 Bursa (TR); Yelseli, Serkan, 16369 Bursa (TR); Dedeoglu, Seref, 16369 Bursa (TR); Tanis, Gurkan, 16369 Bursa (TR); Yetkiner, Emrah, 16369 Bursa (TR); Gunes, Erhan, 16369 Bursa (TR)
(74) Representative: Dericioglu, E. Korhan

(56) References cited:
- WO-A1-2010/150049
- WO-A1-2011/010519
- DE-A1-102010 030 645
- DE-B3-102006 003 351
- US-A1- 2006 208 506
- US-A1- 2007 034 636
- US-A1- 2010 148 531

## Description

### Field of the Invention

The present invention relates to a storage box group which enables easy closing and slow opening for vehicles and includes air curtain mechanism.

### Background of the Invention

The storage box is defined as the small compartment with a cover wherein the instruments necessary for the driver is placed in the vehicle. In the state of the art, as the cover mechanism which stays in close mode with the spring force pressure, there is a need for using a spring higher than necessary. This causes problems such as increasing the resistance of the system and increase in costs. As the value of the spring used to enable the storage box to make sufficient pressure is high, the storage box is opened faster than the necessary value.

In the prior art, more force should be used in order to close the storage box cover again (to stretch the spring again). When high-modulus springs are used for the purpose of increasing the pressure value of the storage box in closed mode, opening load of the storage box increased as well. The deceleration system enables the cover to open slowly by resisting the rotational motion by rotating in a gel (light grease). The cost is high and its function is single. Moreover, when the cover of the storage box having a cooling systems opens, warm air gets in and decreases the cool air efficiency.

In the state of the art, standard deceleration mechanisms can be used with a gearwheel group, a motion direction changer, and a cord connection group. As there is a rotational group at the upper and lower parts of the storage box, the group being far from the lower rotation axis, it can be applied directly. In the state of the art, direct deceleration mechanism cannot be applied as a high moment is generated at the rotation point in the lower part and thus it requires very high resistance and as the costs of a mechanism to apply this resistance increases a lot.

In the prior art, the deceleration device system enables the cover to open slowly by resisting the rotational motion by rotating in a gel (light grease). The cost is high and its function is single.

The South Korean patent document no. KR100901596, discloses an air damper for the glove box of a vehicle. The box is opened from the initial opening to the end smoothly by using a spring of which spring constant is different. An air damper for an automotive glove box comprises a cylinder(12) which is installed inside a glove box, first and second buffering units which are installed inside the cylinder, a fastening pin(14) which is installed in the cover of the glove box, and a wire(13) which connects the fastening pin and the first buffering unit. The second buffering unit comprises a second piston(16) which maintains airtight in the inner center of the cylinder, and a second spring(11) which elastically supports a second piston. The second spring has a spring constant which is greater than the first spring.

### Summary of the Invention

The objective of the present invention is to provide a storage box group which can stay at close mode without a need for a spring pressure when closed manually.

Another objective of the present invention is to provide a storage box group which is opened slowly and locks at open condition, by the accumulation of the force, acting during opening due to gravity, as energy.

Yet another objective of the invention is to provide a storage box group which enables automatic closing motion after half closing, with applying a force close to the force used without any accumulation.

Still another objective of the invention is to provide a storage box group which enables a more efficient closing as the surface pressure increases in the case that a weight is put therein.

### Detailed Description of the Invention

A storage box group developed to fulfill objectives of the present invention is illustrated in the accompanying figure, in which:

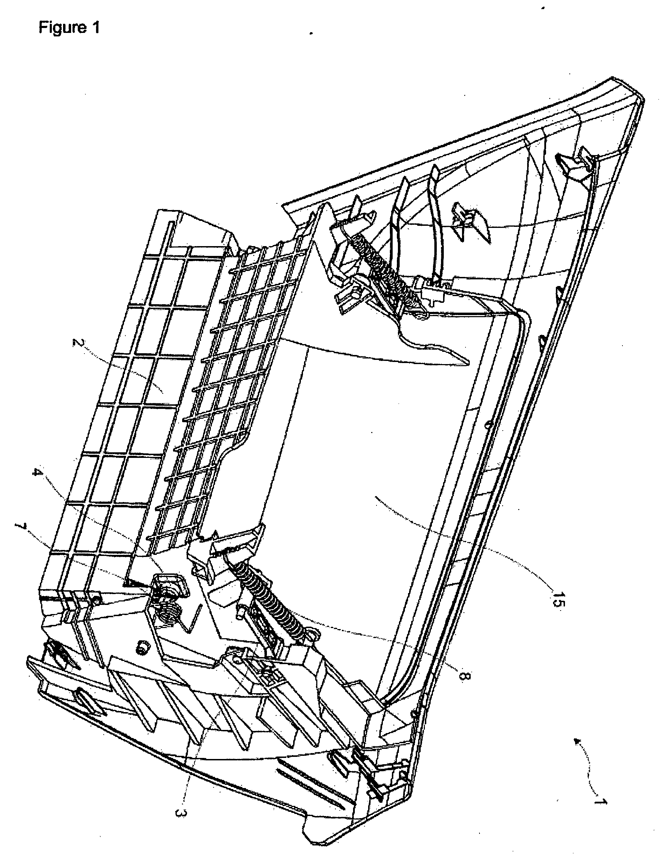

Figure 1 is the general view of the inventive storage box group.

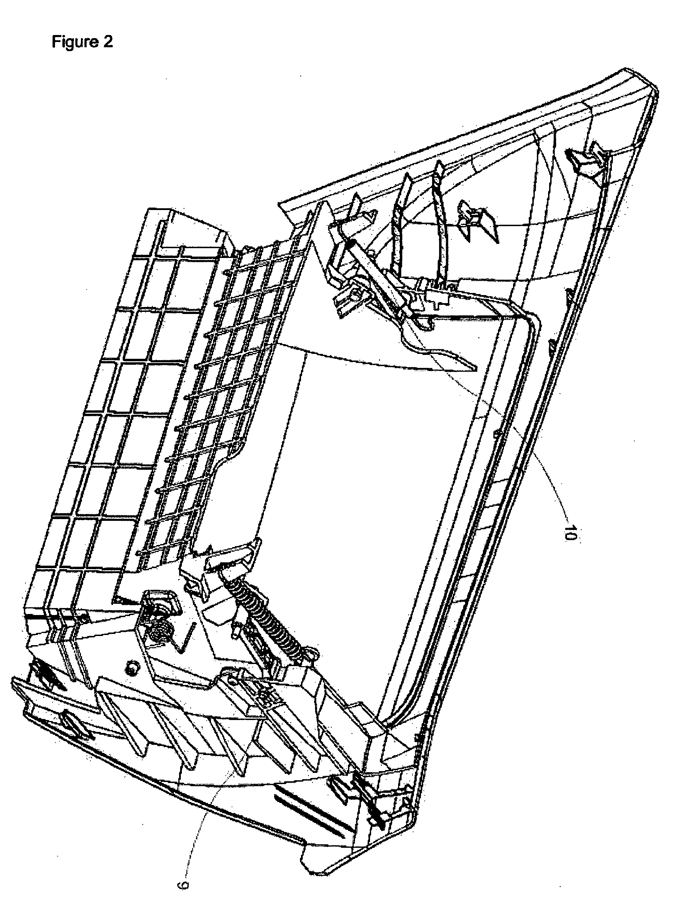

Figure 2 is the general view of the inner part of the inventive storage box group.

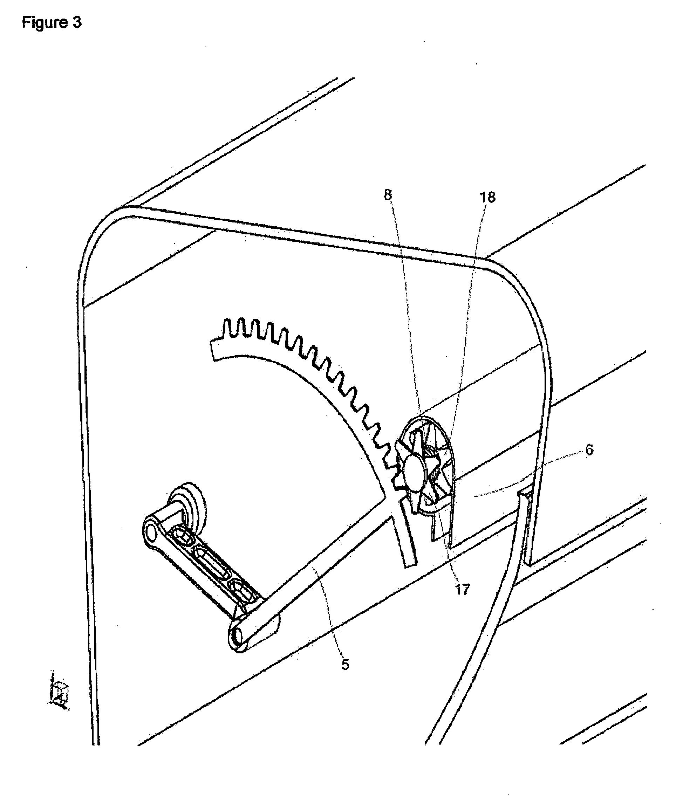

Figure 3 is the general view of the outer edge part of the inventive storage box group.

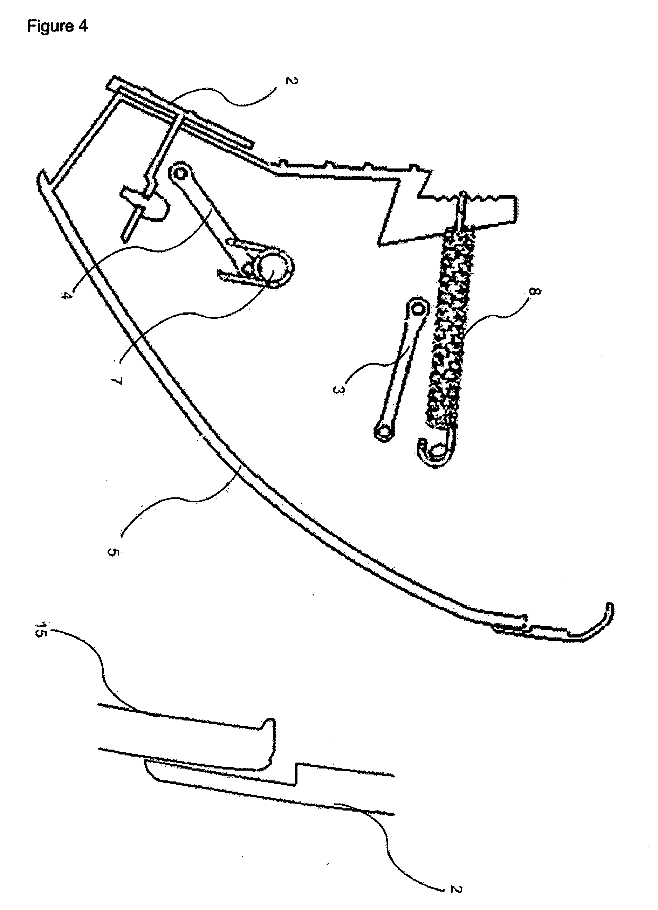

Figure 4 is the view of the inner part pieces of the inventive storage box group.

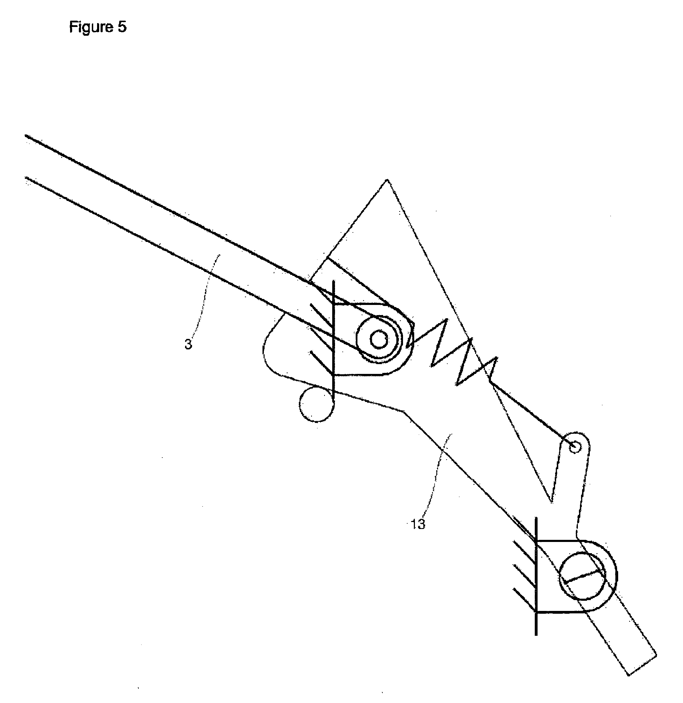

Figure 5 is the view of the inner connection pieces of the inventive storage box group.

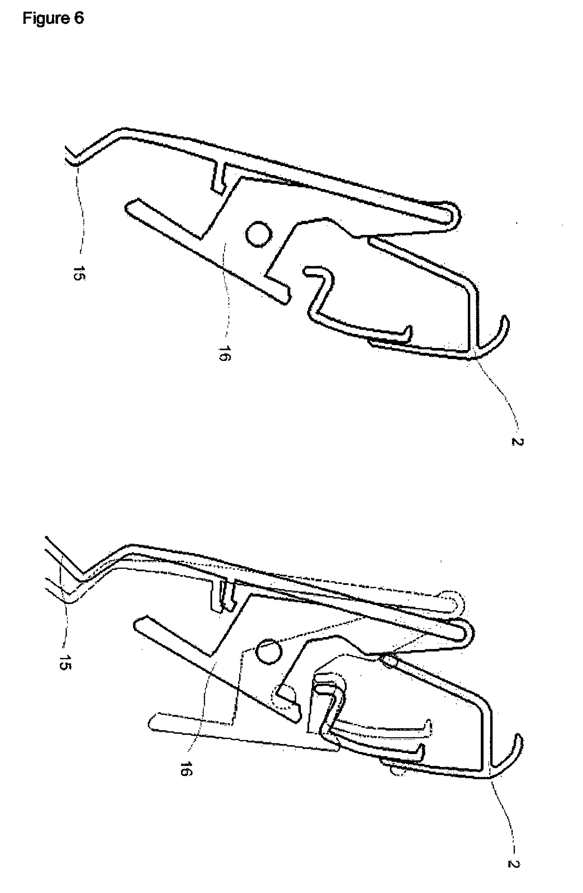

Figure 6 is the view of opening and closing pieces of the inventive storage box group.

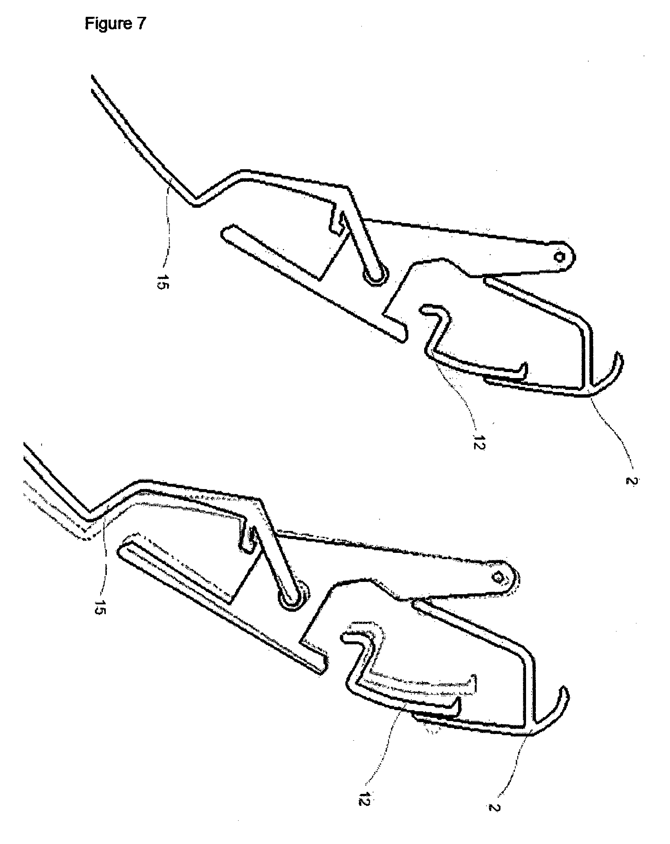

Figure 7 is the view of the inner part pulling and pushing pieces of the inventive storage box group.

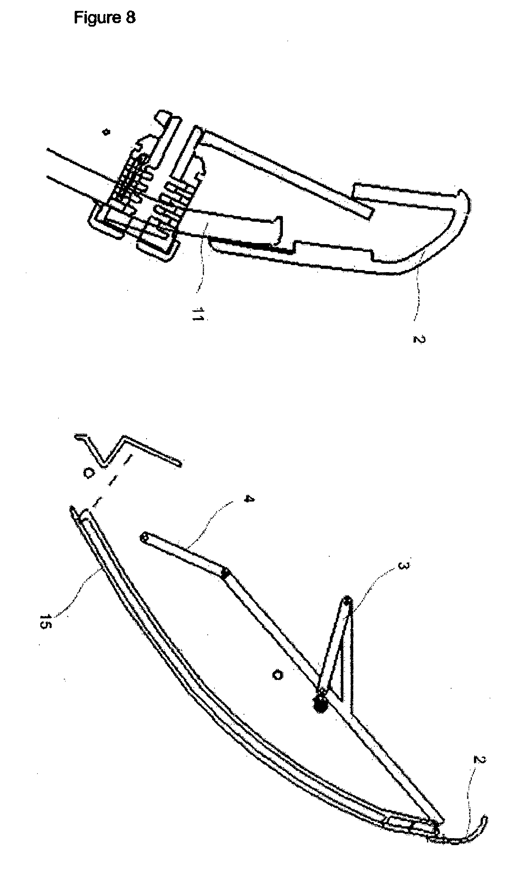

Figure 8 is the view of the locking pieces of the inventive storage box group.

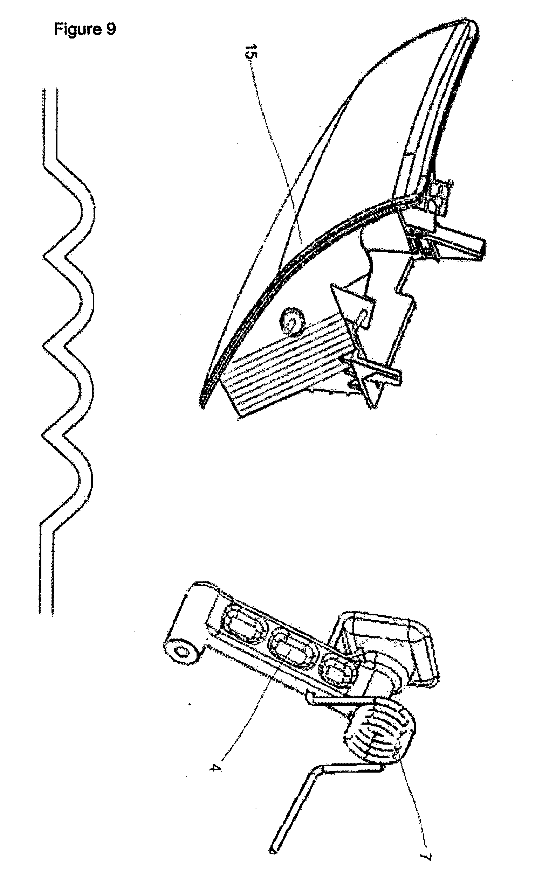

Figure 9 is the view of the inner part joint pieces of the inventive storage box group.

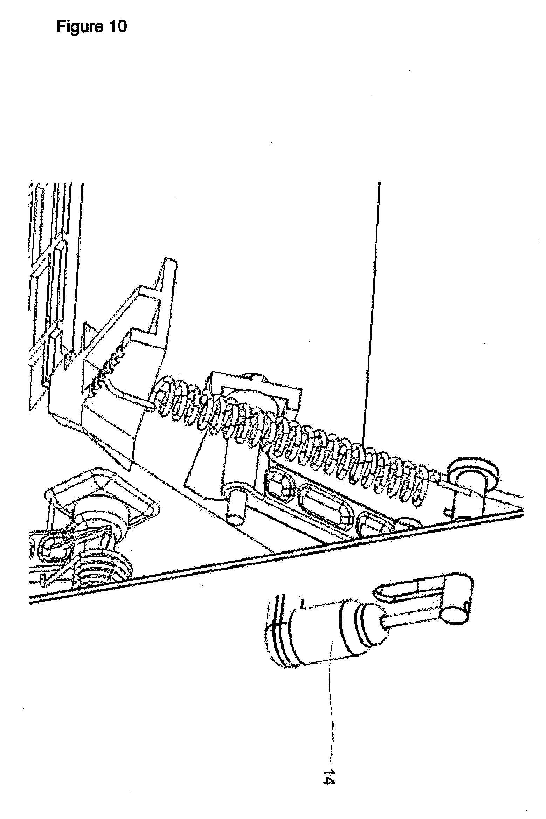

Figure 10 is the view of the inner edge part of the inventive storage box group.

The components given in the figures are numbered and the numbers refer to the following:
1. Storage box group
2. Fixed storage box frame
3. Upper link
4. Lower link
5. Primary gearwheel
6. Fan frame
7. Pulling spring
8. Torsion spring
9. Rotational deceleration piece
10. Linear deceleration piece (damping and deceleration damper)
11. Lock
12. Handle pushing piece
13. Easy closing link
14. Magnetic opening device
15. Cover
16. Handle pulling piece
17. Secondary gearwheel
18. Fan

The inventive storage box group which enables easy closing and slow opening for vehicles and includes air curtain mechanism comprises;
- at least two upper links (3) and lower links (4)
- at least one storage box frame (2) which forms the structural skeleton,
- at least one cover (15) which is connected such that it will have rotation freeness at both connection points, with two upper links (3) and two lower links (4) on the fixed storage box frame (2),
- at least one torsion spring (8) one end of which is connected to the joint and the other end is connected to the fixed storage box frame (2),
- at least two pulling springs (7) which are connected between the fixed storage box frame (2) and the cover (15),
- at least one handle pulling piece (16) which is embedded to the cover (15) such that there will be rotation freeness thereon,
- at least one handle pushing piece (12) which can rotate around the rotation axis by pushing the fixed storage box frame (2) contact point by rotating around the rotation point,
- at least one lock (11) which enables the cover (15) to stay fixed in close mode,
- at least one linear deceleration mechanism (10) which prevents the cover (15) from moving fast while opening and closing,
- at least one rotational deceleration piece (9) which enables to slow down the movement by generating a friction and thus pressure by means of a gearwheel rotating in a high density liquid (grease oil),
- at least one primary geared piece (5) which enables to store energy on the spring (8),
- at least one magnetic opening device (14) which is connected to the storage box fixed frame (2) and can open the cover (15) in an electromagnetic way,
- at least one fan (18) which prevents the cooled or heated air in the cover to leak into the vehicle cabin during the opening of the cover (15),
- at least one secondary gearwheel (17) the rotation axis of which is coinciding with the rotation axis of the storage box cover (15),
- at least one fan frame (6) which surrounds the fan and protects it from external factors,
- at least one easy closing link (13) which enables the cover to close comfortably.

The cover (15) is connected such that it will have rotation freeness at both connection points, with two upper links (3) and two lower links (4) on the fixed storage box frame (2). At least two torsion springs (8) are connected between the lower links (4) and upper links (3), and the fixed storage box frame (2), such that one is at the right and the other is at the left. One end of the spring (8) in free position is connected to the joint and the other end is connected to the fixed storage box frame (2) and pre-stress is generated. The torsion spring (8) one end of which is connected to the fixed storage box (2) is exposed to force in the direction of rotating lower and upper joints upwards (in the closing direction of the storage box (1)).

At the upper part of the storage box (1) at least two pulling springs (7) are connected between the fixed storage box frame (2) and the cover (15). One end of the pulling spring is connected to the connection points on the protrusion on the fixed part of the storage box and on the cover (15). The connection points on the cover (15) are applied multiple theoretical calculation in a line or curve axis, and for the purpose of tolerating measure differences between physical models, the connection axis is changed and working curve is adjusted. The fixed storage box frame (2) and the storage box cover (15) contact each other at the inner part of the cover. A seal which is made of elastic material is additionally placed at the contact point. The storage box (1) can operate even without the seal.

One end of the pulling spring (7) is connected to the body and the other end is connected to the cover (15), when it is in stretched length. The external force applies a force to the cover (15) to pull it inside the vehicle. The torsion spring (8) is connected to the lower and upper joints; one end of the spring is connected to the body and the other end is connected to the links (3, 4) such that it will apply pre-load. The torsion spring (8) applies an external force load in such a way to turn the link upward from the point it is connected; thus it applies load in such a way to increase the pressure load on the contact point of the cover (15) and the fixed storage box frame (2) and or on the seal. In order to get the storage in open position, the external force should be applied as pushing, from the upper part of the cover (15).

When the cover (15) is pushed, the axis of the torsion spring (8) connected to the lower links (4) and upper links (3) changes with the movement of the cover (15) and it starts applying force downwardly from the point where it is connected to the links (3, 4) (in the opening direction of the cover (15)). As the force application ends, the cover starts opening automatically with the force applied by the torsion spring and with its own weight.

During the opening of the box storage cover (15), the pulling spring (7) continues stretching and slows down the opening movement. By this way, a slow opening movement is provided for the storage box (1) without a need for an additional deceleration mechanism.

The cover (15), which is released from the anti-vibration seals as a result of the energy accumulated during the opening of the cover due to the interference of the seals and links (3, 4) and the upward force applied to close the cover, can be easily closed by means of retrieval of the accumulated energy. The storage box group (1) can be operated only with the pulling spring (7).

If the force applied by the pulling spring (7) causes a rapid movement even though there is an interference with the weight of the storage box (1) (based on the cover (15) weight and position), it starts interference movement from the contact point of the links (3, 4) with the elastic seals placed under the links (3, 4) and the storage box (1) continues to open slowly. The rotating joint has rotational freeness. The joint can be pulled up with the protrusion attached on the cover (15) during the closing movement applied manually. During closing, firstly the protrusion pushes the joint upwards and enables the shaft to move upward whereon the spring (8) is connected.

The contact surface of the protrusion on the storage box cover (15) which is pulled a bit, the contact surface being on the rotational joint, is ended and its contact with the protrusion is started and the rotational joint continues to be pulled up with the protrusion. By using two protrusions, there is no obligation for using a rotational joint. As the distance between the protrusion and the spring (8), storage box cover (15) and the upper joint connection point is increased, the storage box cover (15) starts to close automatically after this point by pulling the storage box cover (15) upwards. At this point, the protrusion separates from the contact surface on the rotational joint, the contact between the protrusion on the cover and the rotational joint starts for the stopper (10) on the other side and a click sound is heard. After this point, there is no need to pull up the storage box cover (15) manually.

The protrusion is separated from the rotational joint contact surface with the opening force applied to the upper part of the storage box cover (15) in order to open the storage box (1); then it allows the cover to open by rotating in the opening direction of the storage box cover (15).

The contact point between the links (3, 4) and the cover (15) is expanded on the links (3, 4), possible strains towards right and left during the operation movement of the storage box (1) are prevented and a constant movement is enabled.

The protrusion on the cover (15) whereon the links (3, 4) are connected can be produced as a shaft or as a protrusion machined directly on the piece. By this way, advantage is obtained in terms of costs.

The protrusion on the storage box cover (15) penetrates into the semi-lunar channel machined on the storage box (1) body and can be operated similarly without using the links (3, 4).

The handle pulling piece (16) which is embedded to the cover (15) such that there will be rotation freeness thereon, contacts with the fixed storage box frame (2). When the handle (16) is pulled by manual force, the handle (16) rotates around the rotating axis by pushing the contact point and moves the storage box (1) by acting as a lever. The torsion spring (8) is attached to the rotating point. The storage box (1) which is activated at the end of this movement opens and the handle (16) gets back to its first position with the force applied by the torsion spring (8).

In the case that handle (16) is used, the lever effect contact point and manual pulling force contact point distance is changed, and a lower opening load or a higher closed position contact load can be applied. A higher closed position contact load reduces the risk of disturbing sounds on the road.

The same handle piece (16) can be used as the pushing button by changing the rotation point. When it is pushed by manual force from the manual pushing point, the handle pushing piece (12) rotates around the rotating point and pushes the fixed storage box frame (2) contact point and rotates around the rotating axis; then moves the storage box cover (15) functioning as a lever. The activated storage box (15) opens automatically.

The same method can be used for the movement of opening sideways by changing the handle (12) geometry and the cover (15) rotating point connection. When it is pulled by an F force from the pulling point, the handle piece (16) rotates around the rotating point and pushes the fixed storage box frame (2) contact point and rotates around the rotating axis; then moves the storage box cover (15) inwards functioning as a lever. The activated storage box (15) opens automatically. The method of opening sideways is as from left to right or from right to left. The rotation axis can be above, at the same axis with the manual pulling force application point or below.

The rotation point can be used as the side pushing piece (12) by being changed. Lock (11) mechanism can be applied on the storage box mechanism without a need to apply a handle piece (12). When the standard lock (11) mechanism is at open position, it keeps its horizontal position with the open position lock (11) stopper and has no effect on the operation of the mechanism. When the lock mechanism is in open position, it is secured by means of the locked position stopper and the lock (11) latch getting behind the locking wall is stopped against the force applied to open the storage box (1) and the storage box (1) is prevented from opening.

The storage box (1) is not opened unless a force or an impact large enough to break the storage box (1) or the lock wall is applied. It is possible to apply impact damping and deceleration damper (a linear type standard decelerating mechanism) (10) on the mechanism. Linear deceleration mechanism (10) can be applied to the connection points of the linear pulling spring (7) connected to the upper part, directly or with standard connection members.

It is possible to attach spring (7) to one of the spring connection details at the upper part of the storage box (1) and to attach damping and deceleration damper (10) to the other one. By this way, both details can be used at the same time or separately.

Also, rotational deceleration piece (9) can optionally be applied on the deceleration mechanism. The rotational deceleration piece (9) enables to slow down the movement by generating a friction and thus pressure by means of a gearwheel rotating in a high density liquid (grease oil). The rotational deceleration piece (9) can be attached to the connection point of the lower joints with the body or with the cover (15) by means of direct one or two or more standard connection member.

In cooled type standard storage boxes opened from one single point, the linear damping and decelerating mechanism (10) located on the storage box (1) uses the energy damped during opening in order to slow down the storage box (1); and by this energy, pressurized air is blown downwardly from the cover opening point and the heat in the cooled or heated storage box (1) is prevented from leaking into the cabin. In the deceleration and air curtain can be applied to present storage box systems and the inventive storage box group (1).

If the deceleration mechanism (10) having air curtain application feature is desired to be applied to the storage box cover (15) which opens from a classical single point, it is placed on the semi-lunar cover (15) whose rotation axis intersects with the storage box cover (15) rotation axis and on which a secondary gearwheel (17) is machined. Welded connection method can be used or it can be mounted on the cover (15) with standard connection members. This detail moves with the cover (15) and rotates the secondary gearwheel (5) connected to the shaft by driving it with standard gearwheel operation method. This gearwheel, fan shaft and the fan (18) can be produced together or they can be produced separately and connected with welded or other standard connection methods. The secondary gearwheel (5) which rotates faster than the cover (15) due to the difference in their rotation diameters spins the fan (18), on which it is attached, in the fan cabin at the same speed; pumps pressurized air downwards and establishes an air curtain; and prevents the cooled or heated air in the cover from leaking into the cabin.

In the case that the small gearwheel (5) and the fan shaft are designed and mounted such that they can rotate around each other, if a spring (8) is mounted between the two pieces, air curtain is established after the opening movement and falling energy is stored. One end of the spring (8) is attached to the fan and the other end is attached to the fan (18) shaft. The small gearwheel (5) is rotated during the cover opening movement, the geared piece (5) stores energy on the spring (8) and the stored energy spins the fan shaft and the fan (18). When the opening movement is completed and the cover (15) and the gearwheel (17) on the cover stop, the fan (18) also stops but the spring (8) whereon energy is stored transmits this energy to the fan shaft, enables the fan shaft and the fan (18) to spin and the air curtain function continues. The same operation pattern is performed during the closing of the cover (15) and the fan (18) continues functioning after the cover (15) is closed and sustains the inner air circulation for some time.

In the preferred embodiment of the inventive storage box (1), it can be opened by the electromechanical way such that it will require less cost than the current method. The spring (7) pulls the storage box cover (15), presses on the storage box fixed frame (2) thus on the seal at the contact point; this can be performed when the upper rotation links (3) of the connection point are upwards from the connection point to the storage box fixed frame (2). In the case that the spring (7) connection axis is lower than the upper link (3) connection axis, the pulling force acted by the spring (7) which is applied pre stress will cause the upper link (3) to be rotated to open the storage box (1). In this case, the storage box cover (15) will not remain closed and it will open.

If a point designed as the standard connection member wherein the spring (7) is connected to the storage box frame (2) is placed in a slot and is connected to the standard magnetic opening device (14) with standard connection method, or if the magnetic pulling device (14) is connected to the storage box fixed frame (2), the storage box (1) can open electromagnetically. When the magnetic pulling device (14) is placed in the upper position, or when the magnetic pushing device is placed in the lower position, it can open the storage box cover (15) at unloaded (not given any current) with the same operation method.

## Claims

1. A storage box group (1) which enables easy closing and slow opening for vehicles and includes air curtain mechanism **comprising**;
- at least two upper links (3) and lower links (4)
- at least one storage box frame (2) which forms the structural skeleton,
- at least one cover (15) which is connected such that it will have rotation freeness at both connection points, with two upper links (3) and two lower links (4) on the fixed storage box frame (2),
- at least one torsion spring (8) one end of which is connected to the joint and the other end is connected to the fixed storage box frame (2),
- at least two pulling springs (7) which are connected between the fixed storage box frame (2) and the cover (15),
- at least one handle pulling piece (16) which is embedded to the cover (15) such that there will be rotation freeness thereon,
- at least one handle pushing piece (12) which can rotate around the rotation axis by pushing the fixed storage box frame (2) contact point by rotating around the rotation point,
- at least one lock (11) which enables the cover (15) to stay fixed in close mode,
- at least one primary geared piece (5) which enables to store energy on the spring (8),
- at least one secondary gearwheel (17) the rotation axis of which is coinciding with the rotation axis of the storage box cover (15),
- at least one fan frame (6) which surrounds the fan and protects it from external factors,
- at least one easy closing link (13) which enables the cover to close comfortably; and **characterized by**
- at least one linear deceleration mechanism (10) which prevents the cover (15) from moving fast while opening and closing,
- at least one rotational deceleration piece (9) which enables to slow down the movement by generating a friction and thus pressure by means of a gearwheel rotating in a high density liquid (grease oil),
- at least one magnetic opening device (14) which is connected to the storage box fixed frame (2) and can open the cover (15) in an electromagnetic way,
- at least one fan (18) which prevents the cooled or heated air in the cover to leak into the vehicle cabin during the opening of the cover (15).

2. A storage box group (1) according to Claim 1, **characterized by** at least one fan (18) on which the secondary gearwheel (5) that rotates faster than the cover (15) due to the difference in their rotation diameters is attached and which pumps pressurized air downwards and establishes an air curtain.

3. A storage box group (1) according to Claim 1 and 2, **characterized by** the cover (15) which can be closed more easily by means of the recovery of the energy accumulated due to the intersection of the links (3, 4) and the energy accumulated as a result of the force applied upwardly in order to close the cover

4. A storage box group (1) according to any one of the preceding claims, **characterized by** the pulling spring (7) which is at least two in number being attached between the fixed storage box frame (2) and the cover (15).

5. A storage box group (1) according to any one of the preceding claims, **characterized by** at least one torsion spring (8) one end of which is connected to the body and the other end is connected to the links (3, 4) such that it will apply front load.

6. A storage box group (1) according to any one of the preceding claims, **characterized by** at least one cover (15) which applies force downwardly from the point it is connected to the links (3, 4) with a cover (15) movement in the direction of the axis of the torsion spring (8) that is connected to the lower links (4) and the upper links (3) when it is pushed.

7. A storage box group (1) according to any one of the preceding claims, **characterized by** the handle pulling piece (16) which is embedded to the cover (15) such that there will be rotation freeness thereon.

8. A storage box group (1) according to any one of the preceding claims, **characterized by** at least one magnetic opening device (14) which is connected to the storage box fixed frame (2) and can open the cover (15) electromagnetically.

## Patentansprüche

1. Eine Ablageboxgruppe (1) für Fahrzeuge, welche ein einfaches Schließen sowie langsames Öffnen ermöglicht und Luftschleier-Mechanismus beinhaltet, umfassend;
- mindestens zwei obere Verbindungen (3) und untere Verbindungen (4)
- mindestens einen Ablagebox-Rahmen (2), der das strukturelle Gerippe bildet,
- mindestens eine Bedeckung (15), die so angeschlossen ist, dass sie an beiden Verbindungsstellen mit zwei oberen Verbindungen (3) und zwei unteren Verbindungen (4) auf dem befestigten Ablagebox-Rahmen (2) eine Rotationsfreiheit besitzt,
- mindestens eine Torsionsfeder (8), deren ein Ende an das Gelenk angeschlossen und das andere Ende an den Ablagebox-Rahmen (2) angeschlossen ist,
- mindestens zwei Zugfeder (7), welche zwischen dem befestigten Ablagebox-Rahmen (2) und der Bedeckung (15) angeschlossen sind,
- mindestens ein Griff-Zugstück (16), welches in die Bedeckung (15) so eingebettet ist, dass es darauf eine Rotations-Freiheit gibt,
- mindestens ein Griff-Druckstück (12), welches sich durch Drücken des befestigten Ablagebox-Rahmen (2)-Berührungspunkts durch Drehen um den Drehpunkt um die Drehachse drehen kann,
- mindestens einen Verschluss (11), welcher es ermöglicht, dass die Bedeckung (15) in geschlossenem Stand bleibt,
- mindestens ein primäres verzahntes Teil (5), welches es ermöglicht, Energie in der Feder (8) zu speichern,
- mindestens ein sekundäres verzahntes Teil (17), dessen Drehachse sich mit der Drehachse der Ablagebox-Bedeckung (15) deckt,
- mindestens einen Lüfter-Rahmen (6), welcher den Lüfter umgibt und ihn vor äußeren Einflüssen schützt,
- mindestens eine Leicht-Schluss-Verbindung (13), welche es ermöglicht, die Bedeckung auf eine angenehme Weise zu schließen und **gekennzeichnet durch**
- mindestens einen Mechanismus für geradlinige Verzögerung (10), welcher es behindert, dass die Bedeckung (15) sich während der Öffnung und Schließung zu schnell bewegt,
- mindestens ein Rotationsverzögerungsteil (9), welches **durch** Erzeugung einer Reibung und somit eines Drucks mittels eines in einer Flüssigkeit mit hoher Dichte (Schmieröl) die Verlangsamung der Bewegung ermöglicht,
- mindestens eine magnetische Öffnungsvorrichtung (14), welche an Ablagebox-Festrahmen (2) angeschlossen ist und die Bedeckung (15) auf eine elektromagnetische Weise öffnen kann,
- mindestens einen Lüfter (18), welcher es verhindert, dass die gekühlte bzw. erwärmte Luft in der Bedeckung während der Öffnung der Bedeckung (15) in den Fahrzeuginnenraum einströmt.

2. Eine Ablageboxgruppe (1) nach Anspruch 1, **gekennzeichnet durch** mindestens einen Lüfter (18), an dem das sekundäre Zahnrad (5) angeschlossen ist, das sich infolge der Differenz ihrer Rotations-Durchmesser schneller als die Bedeckung (15) drehen kann und welches die unter Druck stehende Luft abwärts pumpt und einen Luftschleier herstellt.

3. Eine Ablageboxgruppe (1) nach Anspruch 1 und 2, **gekennzeichnet durch** die Bedeckung (15), welche mit Hilfe der Rückgewinnung der wegen Überschneidung der Verbindungen (3, 4) angesammelten Energie sowie der als eine Folge der zum Schließen der Bedeckung aufwärts angewendeten Kraft angesammelten Energie viel leichter geschlossen werden kann.

4. Eine Ablageboxgruppe (1) nach einem der vorangehenden Ansprüche, **gekennzeichnet durch** Zugfeder (7), welche mindestens zwei an der Zahl ist, wobei sie zwischen dem festen Ablagebox-Rahmen (2) und der Bedeckung (15) befestigt werden.

5. Eine Ablageboxgruppe (1) nach einem der vorangehenden Ansprüche, **gekennzeichnet durch** mindestens eine Torsionsfeder (8), deren ein Ende am Aufbau angeschlossen und das andere Ende an den Verbindungen (3, 4) angeschlossen ist, so dass sie Front-Last anbringt.

6. Eine Ablageboxgruppe (1) nach einem der vorangehenden Ansprüche, **gekennzeichnet durch** mindestens eine Bedeckung (15), welche von dem Punkt abwärts eine Kraft ausübt, an dem sie an Verbindungen (3, 4) angeschlossen ist, **durch** eine Bewegung der Bedeckung (15) in Richtung der Achse der Torsionsfeder (8), die an unteren Verbindungen (4) sowie oberen Verbindungen (3) angeschlossen ist, wenn sie gedrückt ist.

7. Eine Ablageboxgruppe (1) nach einem der vorangehenden Ansprüche, **gekennzeichnet durch** ein Griff-Zugstück (16), welches in die Bedeckung (15) so eingebettet ist, dass es darauf eine Rotations-Freiheit gibt.

8. Eine Ablageboxgruppe (1) nach einem der vorangehenden Ansprüche, **gekennzeichnet durch** mindestens eine magnetische Öffnungsvorrichtung (14), welche an Ablagebox-Festrahmen (2) angeschlossen ist und die Bedeckung (15) auf eine elektromagnetische Weise öffnen kann.

## Revendications

1. Un groupe de boites de rangement (1) permettant à la clôture facile et l'ouverture lente pour les véhicules et comprenant un mécanisme de rideau d'air comportant
- au moins deux liens supérieurs (3) et liens inférieurs (4),
- au moins un cadre de boite de rangement (2) formant le squelette structurel,
- au moins un couvercle (15) lié dans une façon qu'on aura une liberté de rotation aux deux points de connexion, avec deux liens supérieurs (3) et liens inférieurs (4) étant sur le cadre fixe de boite de rangement (2),
- au moins un ressort de torsion (8) dont une extrémité est raccordée au joint et l'autre au cadre fixe de boite de rangement (2),
- au moins deux ressorts de rappel (7) reliés entre le cadre fixe de boite de rangement (2) et le couvercle (15),
- au moins une pièce (16) retirant la poignée intégrée dans le couvercle (15) dans une manière qu'il y aura une liberté de rotation sur celui-ci,
- au moins une pièce (12) poussant la poignée pouvant pivoter autour de l'axe de rotation en poussant le cadre fixe de boite de rangement (2) au point de contact en tournant autour du point de rotation,
- au moins une serrure (11) permettant au couvercle (15) de rester dans la position fermée dans une manière fixe,
- au moins une première pièce d'engrenage (5) permettant le stockage de l'énergie sur le ressort (8),
- au moins une deuxième pièce d'engrenage (17) coïncidant avec l'axe de rotation du couvercle (15) de boite de rangement,
- au moins un cadre de ventilateur (6) entourant et protégeant le ventilateur contre les facteurs extérieurs,
- au moins un lien de clôture facile (13) permettant la clôture confortable du couvercle, et **caractérisé par**
- au moins un mécanisme de décélération linéaire (10) empêchant le mouvement rapide du couvercle (15) pendant son ouverture ou clôture,
- au moins une pièce de décélération de rotation (9) permettant la décélération le mouvement en générant une friction et donc une pressure par voie d'un pignon tournant dans une liquide d'haute densité (la graisse),
- au moins un dispositif magnétique d'ouverture (14) relié au cadre fixe (2) de boite de rangement et capable d'ouvrir le couvercle (15) dans une manière électromagnétique,
- au moins un ventilateur (18) empêchant la fuite de l'air refroidi ou chauffé à l'intérieur du couvercle dans l'habitacle pendant l'ouverture du couvercle (15).

2. Un groupe de boites de rangement (1) selon la revendication 1, **caractérisé par** au moins un ventilateur (18) sur lequel est attachée une deuxième pièce d'engrenage (5) tournant plus rapide que le couvercle (15) à cause de la différence entre leurs diamètres et pompant de l'air comprimé vers le bas et établissant un rideau d'air.

3. Un groupe de boites de rangement (1) selon les revendications 1 et 2, **caractérisé par** le couvercle (15) pouvant être fermé plus facilement par voie de la récupération de l'énergie accumulée à cause de l'intersection des liens (3,4) et l'énergie accumulée en conséquence de la force appliquée verticalement afin de fermer le couvercle.

4. Un groupe de boites de rangement (1) selon l'une des revendications précédentes, **caractérisé par** au moins deux ressorts de rappel (7) reliés entre le cadre fixe de boite de rangement (2) et le couvercle (15).

5. Un groupe de boites de rangement (1) selon l'une des revendications précédentes, **caractérisé par** au moins un ressort de torsion (8) dont une extrémité est raccordée au corps et l'autre aux liens (3,4) dans une façon qu'il appliquera la charge par l'avant.

6. Un groupe de boites de rangement (1) selon l'une des revendications précédentes, **caractérisé par** au moins un couvercle (15) appliquant la force vers le bas de son point de connexion aux liens (3,4) avec le mouvement de couvercle (15) dans la direction de l'axe du ressort de torsion (8) relié aux liens inférieures et supérieures quand il est poussé.

7. Un groupe de boites de rangement (1) selon l'une des revendications précédentes, **caractérisé par** une pièce (16) retirant la poignée intégrée dans le couvercle (15) dans une manière qu'il y aura une liberté de rotation sur celui-ci.

8. Un groupe de boites de rangement (1) selon l'une des revendications précédentes, **caractérisé par** au moins un dispositif magnétique d'ouverture (14) relié au cadre fixe (2) de boite de rangement et capable d'ouvrir le couvercle (15) dans une manière électromagnétique,
